# EUROPEAN PATENT APPLICATION

(11) **EP 1 724 488 A2**
(43) Date of publication of application: **22.11.2006**
(21) Application number: 06010178.9
(22) Date of filing: 17.05.2006
(51) Int. Cl.: F16D 55/224

(54) **Disc brake**

(30) Priority: 18.05.2005 US 908592
(71) Applicant: ROBERT BOSCH GMBH, 70442 Stuttgart (DE)
(72) Inventor: Clark, John, Granger, Indiana 46530 (US); Mackiewicz, John Edmund, Niles, Michigan 49120 (US)
(74) Representative: Costello-Saile, Thomas Johannes

(57) **Abstract**

A disc brake (10) having a support member (12) with first (36) and second (38) spaced apart rails that extends toward a rotor (34) to position first (30) and second (32) friction members adjacent corresponding sides of the rotor (34). The support member (12) has a horizontal projection (50) that extends away from the rotor (34) with a first bore (52) therein to receive a piston (64) connected to the first friction member (30) and a peripheral surface (67) thereon that is received in a second bore (76) in a caliper (16) to define a second piston (74) that is connected to the second friction member (32). The first piston (64), horizontal projection (50) and second bore (76) define an actuation chamber (88) that receives pressurized fluid to develop an actuation force to move the first (30) and second (32) friction members into engagement with the rotor (34) and effect a brake application. Retraction seals (62, 84) respectively act on and move the first (30) and second (32) friction members away from the rotor (34) to define a same running clearance.

## Description

This invention relates to a disc brake having a stationary support member with a horizontal projection having a first bore therein for receiving a first piston and a peripheral surface that is received in a second bore in a caliper to define an actuation chamber such that when pressurized fluid is presented to the actuation chamber a force is created that moves the first and second pistons into engagement with a rotor to effect a brake application.

### BACKGROUND OF THE INVENTION

Disc brakes having spaced apart rails that extend from a support member that is fixed to a frame of a vehicle guide to align and position first and second friction pads with respect to a rotor of which the structure in the following U.S. Patents 4,200,173 and 6,454,056 may be considered as representative of the prior art. In such disc brakes, first and second guide pins fixed to a caliper extend through ears on the support member and are retained in corresponding first and second bores that are parallel with the first and second rails. A piston located in a bore of the caliper is connected to the first friction pad and when pressurized fluid is presented to the bore, a force is created the pushes the piston toward the caliper and pulls the caliper toward the caliper to bring the first and second friction pads into engagement with the rotor to effect a brake application. Such disc brakes function in an adequate manner except movement by the caliper to bring the second friction pad into engagement with the rotor requires the caliper to move about twice the distance of the movement of the piston and as a result retraction of the first and second friction pads away from the rotor to define a desire running clearance may not always equally achieve between each friction pad and rotor. When unequal running clearance result when a vehicle is traveling on certain terrain it is possible that a friction pad may inadvertently engage the rotor causing unwanted wear and noise to occur.

### SUMMARY OF THE INVENTION

A primary advantage of the disc brake of the present invention resides in structure wherein first and second friction member are each moved into engagement with a rotor and both are equally moved a same distance away from the rotor to define a same running clearance with the rotor on the termination of a brake application.

In more particular detail, the disc brake has a support member that is fixed to a housing of a vehicle. The support member has first and second spaced apart rails that extends there from in a first direction on which a first friction member is aligned adjacent a first side of a rotor and on which a second friction member that is aligned adjacent a second side of the rotor. The support member has a horizontal projection that extends in a second direction away from the rotor with a first bore therein and a peripheral surface on the end of horizontal projection that is received into a second bore in a caliper. A first piston is located in the first bore such that an actuation chamber is defined by the first piston, horizontal projection and the second bore. The first piston is connected to the first friction member while an arm of the caliper extends over the rotor such that the engagement of the second bore with the horizontal projection aligns the caliper with the rotor to position the second friction member at a position to achieve a desired running clearance with respect to the rotor. When pressurized fluid is presented to the actuation chamber a same force is developed that acts on the first piston and a second piston defined by the housing of the caliper such that the first and second friction members are moved into engagement with the rotor to effect the brake application and are moved a same distance away from the rotor on termination of the pressurized fluid to establish a running clearance.

An advantage of this disc brake resides in the relationship defined between a horizontal projection on a support member that retains a first piston and a resulting second piston defined by a caviler to achieve perpendicular alignment between a rotor and the caliper.

A further advantage of this disc brake resides in a caliper being suspended over a rotor through the engagement of horizontal projection on the support member and a bore within the caliper.

An object of the present invention is to provide a disc brake with structure whereby running clearances between first and second friction members and a rotor are substantially equal even when such friction members have different wear characteristics.

An object of the present invention is to provide a disc brake with structure to define a running clearance between a rotor and first and second friction members that is a function of a fixed relationship between a horizontal projection on an anchor and the rotor.

### BRIEF DESCRIPTION OF THE DRAWINGS

Figure 1 is a front perspective view of a disc brake according to the present invention;
Figure 2 is a rear perspective view of the disc brake of Figure 1;
Figure 3 is a top view of the disc brake of Figure 1;
Figure 4 is an enlarged sectional view taken along lines 4-4 of Figure 3;
Figure 5 is an end view of Figure 2
Figure 6 is an enlarged view showing a relationship between a seal, the horizontal projection on the anchor and a piston for disc brake of Figure 1 in a rest position; and
Figure 7 is an enlarged view of the seal of Figure 6 during a brake application.

### DETAILED DESCRIPTION

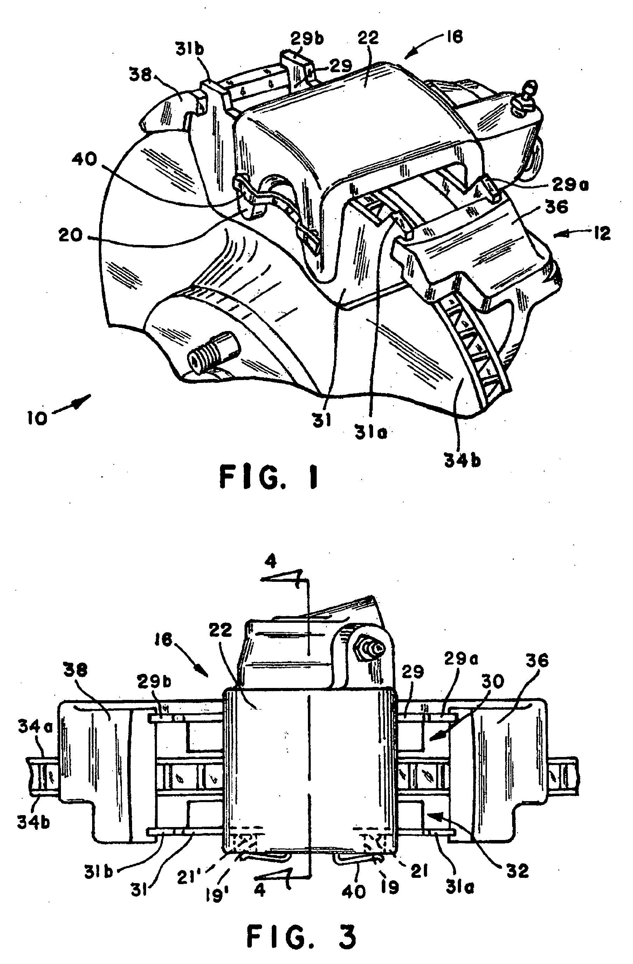

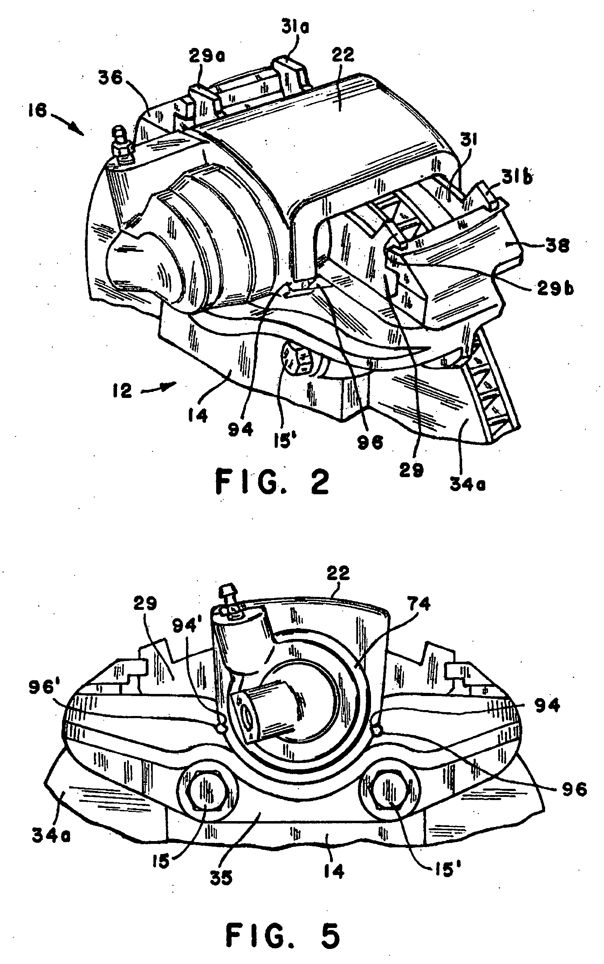

The disc brake 10 shown in Figures 1-5 is distinguished from disc brakes of the prior art such as disclosed in U.S. Patent 4,200,173 by the relationship between a caliper 16 and an anchor or support member 12 of the present invention. The anchor 12 has a base 35 that is fixed to the housing 14 of a vehicle by bolts 15,15' with first 36 and second 38 rails that are spaced apart and extend there from along perpendicular planes such that an ear 29a on backing plate 29 of a first friction member 30 and ear 31 a on backing plate 31 of a second friction member 32 are respectively located on the first rail 36 while ear 29b on backing plate 29 of the first friction member 30 and ear 31 b on backing plate 31 of the second friction member 32 are respectively located on the second rail 38 such that face 30f on the first friction member 30 and face 32f on the second friction member 32 are in respective parallel alignment with face 34a and 34b on rotor 34. The caliper 16 is solely supported on the anchor or support member 12 such the spring clip 40 on second friction member 32 is attached to arm 20 that extends from a bridge 22 such that face 32f of the second friction member 32 is radially aligned face 34b of rotor 34. Similarly, face 30f of the first friction member 30 is aligned with face 34a of rotor 34 by being attached to a piston 26 associated with the actuation section 18 of the disc brake 10. When an operator desires to effect a brake application, pressurized fluid is supplied to an actuation section 18 to develop a force for moving the face 30f on first friction member 30 into engagement with face 34a and for moving face 32f on the second friction member 32 into engagement with face 34b of rotor to retard the rotation of rotor 34 and effect a brake application.

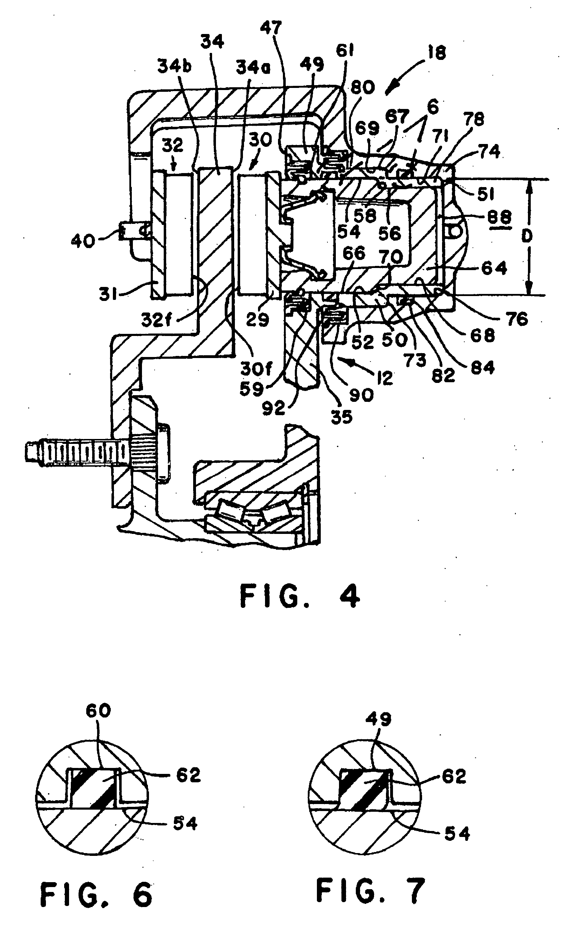

In more particular detail, the anchor 12 further includes a horizontal projection 50 that extends from a flange 49 on base 35 in a direction away opposite from the rails 36 and 38, as best illustrated, in Figure 4 to an end 51. The horizontal projection 50 has a bore 52 that extends from face 47 to end 51 that is parallel to the rails 36 and 38. Bore 52 has a first diameter 54 adjacent face 47 that is separated from a second diameter 56 adjacent end 51 by a shoulder 58 with a radial groove 59 adjacent face 47 for receiving a first seal 61 and an axial groove 60 located in the first diameter 54 from receiving a square faced seal 62, see Figure 6. A piston 64 having a first diameter 66 separated from a second diameter 68 by a shoulder 70 is received in bore 52 such that seal 62 engages the first diameter 66 to define an effective diameter D₁ within bore 52. The engagement of piston 64 with bore 52 is such that the piston 64 is located in perpendicular alignment with rotor 34.

The horizontal projection 50 of anchor 12 is further characterized in that a peripheral surface 67 thereon has a first diameter 69 that is separated from a second diameter 71 by a shoulder 73 such that the second diameter 71 is equal to the first diameter 66 of bore 54.

The caliper 16 is distinguished in that the actuation section 18 has a housing 74 with bore 76 therein as illustrated in Figure 4 with a first diameter 78 and a second diameter 80 with the first diameter corresponding and concentric with diameter 69 and diameter 80 corresponding concentric with diameter 71 on peripheral surface 67 of the horizontal projection 50. An axial groove 82 located in diameter 80 receives a square face seal 84 identical to face seal 62 such that when bore 76 receives end 51 on the horizontal projection 50 an actuation chamber 88 is defined for actuation section 18 and the housing 74 functions as a second piston having an effective diameter D₂ that is equal to the effective area of piston 64. The housing 74 has a radial groove 90 adjacent diameter 80 that receives a seal 92 such that surface defined by diameter 80 is protected from the environment.

The length of the horizontal projection 50 from face 47 to end 51 is such that when caliper housing 74 is positioned thereon as illustrated in Figure 4, the caliper 16 is suspended and held over the rotor 34. The housing 74 is held in a horizontal plane and kept from rotating by keys 96, 96' that extend from base 35 being located in slots 94, 94' in housing 74 as illustrated in Figure 5.

### Mode of Operation

In a vehicle equipped with a disc brake 10, pressurized fluid is presented to actuation chamber 88 that acts on piston 64 to move the first friction member 30 toward rotor 34 and acts on the second piston defined by housing 74 to move caliper 16 away from end 51 of the horizontal projection 50 such that bridge 22 pulls the second friction member 32 toward rotor 34. The effective area defined by diameter 66 for piston 64 and the effective area defined by diameter 78 for housing 74 are equal and as a result a same actuation force moves piston 64 and housing 74 to effect a brake application.

The engagement of face 30f with rotor face 34a and face 32f with rotor face 34b causes a brake torque that is carried through backing plates 29 and 31 into rail 36 or rail 38 depending on the direction the vehicle is traveling to retard the rotation of rotor 34. Tangential slots 19,19' in the arm 20 and similar slots (not shown) on either the clip or on the face on piston 26 allow buttons 21,21' on the backing plates 29, 31, shown by dashed lines in Figure 3, allow the first 30 and second 32 friction members to move tangentially without introducing any forces into the caliper 16 that would effect the axial sliding movement of the caliper 16 with respect to the horizontal projection 50 and as a result a smooth and effective brake application is achieved.

On termination of the presentation of the pressurized fluid to actuation chamber 88, a resulting actuation force ceases, however, the square face seal 62 and the square face seal 84 each have one end that is fixed to the horizontal projection 50 and as a result piston 64 and housing 74 are returned from an actuation position shown in Figure 7 to a position of rest as illustrated in Figure 6 and as a result face 30f on the first friction member 30 is retracted from face 34a on rotor 34 and face 32f on the second friction member 32 is retracted from face 34b on rotor 34 an equal distance to define a same running clearance between the rotor 34 and first 30 and second 32 friction members.

## Claims

1. A disc brake (10) having a support member (12) fixed to a housing with first (36) and second (38) spaced apart rails that extends there from in a first direction for receiving a first friction member (30) that is aligned adjacent a first side (34a) of a rotor (34) and a second friction member (32) that is aligned adjacent a second side (34b) of the rotor (34) and a caliper (16) having an actuation chamber (88) therein for receiving pressurized fluid through which a braking force is developed for moving the first (30) and second (32) friction members into engagement with the rotor (34) to effect a brake application, said support member (12) is further **characterized by** a horizontal projection (50) that extends there from in a direction away from the rotor (34), said projection (50) having a first bore (52) therein for receiving a piston (64) and a peripheral surface (67) therein that is received in a second bore (76) in said caliper (16) to define a second piston (74), said first piston (64), horizontal projection (50) and second bore (76) defining said actuation chamber (88), such that said pressurized fluid acts on said first piston (64) to develop a first force that moves the first friction member (30) a first distance into engagement with the rotor (34) and independently acts said second piston (74) to develop a second force that moves the second friction member (32) a second distance into engagement with the rotor (34) to effect the brake application.

2. The disc brake (10) as recited in claim 1 further **characterized by** a first seal (62) located in said first bore (52) between first piston (64) and said horizontal projection (50) and a second seal (84) located in said second bore (76) between said second piston (74) and said horizontal projection (50), said first (62) and second (84) seals respectively acting on said first (64) and second (74) pistons to move said first (30) and second (32) friction members a same distance away from the rotor (34) in an absence of pressurized fluid in said actuation chamber (88).

3. The disc brake (10) as recited in claim 2 further **characterized by** said first bore (52) in said horizontal projection (50) and said second bore (76) in said caliper (16) having a same effective diameter (D) such that said first and second forces are equal.

4. The disc brake (10) as recited in claim 3 further **characterized in that** the engagement of the first piston (64) with said first bore (52) in the horizontal projection (50) maintains the first piston (64) in perpendicular alignment with the rotor (34).

5. The disc brake (10) as recited in claim 4 further **characterized in that** the engagement of said second bore (76) of the second piston (74) with said peripheral surface (67) on said horizontal projection (50) maintains the caliper (16) in substantially perpendicular alignment with the rotor (34).

6. The disc brake (10) as recited in claim 5 further **characterized in that** said first bore (52) in said horizontal projection (50) is defined by a first shoulder (70) located between a first diameter (66) and second diameter (68) with said first seal (62) being located in a first groove (60) in said first diameter (66) to define a first effective diameter (D₁) in said actuation chamber (88) for said first piston (64).

7. The disc brake (10) as recited in claim 6 further **characterized in that** peripheral surface (67) on said horizontal projection (50) is defined by a second shoulder (73) located between a third diameter (69) and a fourth diameter (71) being equal to said first diameter (66) of in said first bore (52) and second diameter (78) of said second bore (76) in said caliper (16), said second seal (84) being located in a second groove (82) in said caliper (16) to define a second effective diameter (D₂) in said actuation chamber (88) for said second piston (74), said first (D₁) and second (D₂) effective diameters being equal such that a resulting first force acting on the first friction member (30) and a resulting second force acting on the second friction member (32) are also equal.

8. The disc brake (10) as recited in claim 1 further **characterized in that** said horizontal projection (50) engages the caliper (16) to suspend and align the caliper (16) with respect the rotor (34).

9. The disc brake (10) as recited in claim 8 further **characterized in that** said first (30) and second (32) friction members have limited arcuate movement with respect said first piston (64) and said caliper (74) to prevent the introduction arcuate forces into said horizontal projection (50) that would affect the movement of said first piston (64) in said first bore (52) and said second piston (74) on said peripheral surface (67).

10. A disc brake (10) having a support member (12) fixed to a housing with first (36) and second (38) spaced apart rails that extends there from in a first direction for receiving a first friction member (30) that is aligned adjacent a first side (34a) of a rotor (34) and a second friction member (32) that is aligned adjacent a second side (34b) of the rotor (34) and a caliper (16) having an actuation chamber (88) therein for receiving pressurized fluid through which a braking force is developed for moving the first (30) and second (32) friction members into engagement with the rotor (34) to effect a brake application, said support member (12) is further **characterized by** a horizontal projection (50) that extends there from in a direction away from the rotor (34), said projection (50) having a first bore (52) therein for receiving a piston (64) and a peripheral surface (67) therein that is received into a second bore (76) in said caliper (16) to define a second piston (74), said first piston (64), horizontal projection (50) and second bore (76) defining said actuation chamber (88), said pressurized fluid independently acting on said first piston (64) to develop a first force to move the first friction member (30) a first distance away from said horizontal projection (50) and into engagement with the rotor (34) and independently acts said second piston (74) to develop a second force to move the second friction member (32) a second distance away from said horizontal projection (501) and into engagement with the rotor (34) to effect the brake application.

11. The disc brake (10) as recited in claim 10 further **characterized by** seal means (62, 84) for independently retracting said first (30) and second (74) pistons away from the rotor (34) an equal distance to define a running clearance between the first (30) and second (32) friction members and the rotor (34) as a function of a relationship between the projection (50) and rotor (34).
